Europäisches Patentamt

European Patent Office

Office européen des brevets

(11) Publication number:
0 333 612
A2

# EUROPEAN PATENT APPLICATION

(21) Application number: 89480007.7

(22) Date of filing: 17.01.89

(51) Int. Cl.⁴: G 06 F 9/44

(30) Priority: 17.03.88 US 169563

(43) Date of publication of application:
20.09.89 Bulletin 89/38

(84) Designated Contracting States: DE FR GB

(71) Applicant: International Business Machines Corporation
Old Orchard Road
Armonk, N.Y. 10504 (US)

(72) Inventor: Moriarty, Michael Francis
306 4th Street N.E. Byron
P.O. Box 342 MN. 55920 (US)

Fosdick, Eric Leonard
6423 13th Avenue N.W.
Rochester - MN 55901 (US)

Timms, George David
3910 19th AV. N.W.
Rochester - MN 55901 (US)

(74) Representative: Vekemans, André
Compagnie IBM France Département de Propriété
Intellectuelle
F-06610 La Gaude (FR)

(54) Multi-language program.

(57) A computer application program packaging technique which accommodates the selection of a desired national language for the text portion of the program. The application program is divided into two portions, the operational code (2,3) and the text (2a, 3a). This division is maintained to the point of execution of the program. The operational code portion specifies the text portion by the use of objects, which refer to an identify individual text items. When called for by the operational code, the text objects are extracted from the text portion and used for the desired purpose. The objects are generic, that is, they are independent of the language in use. A change from one language to another is effected by simply replacing the text portion of the program with a new language.

FIG. 1

EP 0 333 612 A2

**Description**

## MULTI-LANGUAGE PROGRAM

This invention relates generally to the use of a plurality of different national languages, English, French, German, Italian, etc., with the operational code of an application program, and specifically to application programs in which the operational code refers to text material, separated from the code portion, by means of tags which can be used with any language.

The increasing availability and use of computers throughout the world requires that the so-called "application programs", which are the computer programs directed to particular tasks performed under the direction of the user, provide messages to the operator in a language understood by the operator. For example, a computer being used in Germany for word processing must present messages and accept commands expressed in the German language.

In the past, this requirement has been satisfied by direct translation of all messages and commands and creation of a unique program for each language. While this solution has been satisfactory from the customer standpoint, that is, the user's requirements have been satisfied, it is far from satisfactory from the supplier's standpoint. The individual translation and modification of the program for each language was time consuming and led to undue multiplicity of products. That is, each time the text was translated, a unique program resulted. In the abstract, this might not appear to be a problem. However, the practical difficulties were substantial. For example, any change to the operation code of the program required individual rewriting of each separate language program. Further, the distribution of the programs to the customers required each distribution center to maintain a stock of all language programs. Perhaps the most significant problem, the fact that each language program was different, meant that the program for each language had to be individually tested and debugged. The fact that the program ran satisfactorily in English did not necessarily mean that the version in another language would perform satisfactorily. Finally, when a problem was detected in a program, it was not possible to immediately determine whether the difficulty arose because of the basic operational code or the portion unique to the particular language. This situation was made even worse as fixes were added to the individual programs, making them even more different and creating the potential for future incompatibility with changes to the operational code.

While systems existed which had the capability of displaying messages in different languages, these functioned by translating a message code into an address used to access a language dependent table which then supplied the actual memory address of the message in the desired language. These systems suffer from the fact that they are address dependent, which imposes undesirable constraints on operation of the system. Additionally, such systems generally had all messages in all languages stored in the system. This is an inefficient use of system storage and also constrains the system.

Furthermore, such systems lacked flexibility in that they did not lend themselves to alternative implementations. For example, they generally supplied either one or all of the languages, and there was no ability to select an intermediate number. The address dependent nature of the storage technique made it difficult to update or alter the system once it had been installed.

It has been common practice to provide for the use of different languages by writing the program in a first language, for example, English, where the text material is specified as unique objects. To provide another language for the program, these objects are translated and merged with the operational code to create a unique software package for each desired language.

Another approach involves the separation of the operational code and the text material until a particular language is selected. Subsequent to the selection of the language, the operational code and the text material are merged. The merged code and text is then run on a data processing system. This approach requires a merge operation to be performed each time a language change is made, which is not conducive to either speed or conversion or convenience to the operator.

U.S. Patent 4,365,315 describes a machine tool control system in which messages for the operator are presented in a language selected by the operator. All messages in all languages are resident in the computer storage hierarchy at all times. Access to the particular message in a selected language is accomplished by using a message code to access a message address table, which provides the address for the message in the desired language.

U.S. Patent 4,319,336 relates to a transaction oriented terminal system in which messages are stored at the terminal to relieve the communication link of the burden of transmitting large amounts of text.

A primary object of the invention is to provide an application program in a selected language without substantial impact on the operational code of the program.

An object of the invention is to provide an application program in which the operational code and the text material are separated and the operational code may be used with all language versions without modification.

Still another object of the invention is to provide an application program in which the text material is separated from the operational code and identified by object tags in the operational code.

Yet another object of the invention is to provide a multi-language system in which the operational code shares a plurality of different language text portions, one of which can be selected by the operator at the outset of operation.

These and other objects, features and advantages are realized by an application program having an operational code portion common to all the different languages, and the text material for each language is maintained as a separate entity on the media containing the application program.

Fig. 1 shows the program development process for programs according to the invention, and particularly the relationship between the programming development laboratory, the program translation centers, the software distribution center and the customer.

Fig. 2 shows the generalized content of the alternative forms of computer tape used to distribute the programs according to the invention.

Fig. 3 is a flow chart showing the interaction between the user, the data processing system and the application programs.

Fig. 4 shows a computer display screen presented to a user for the purpose of loading an application program and making a language.

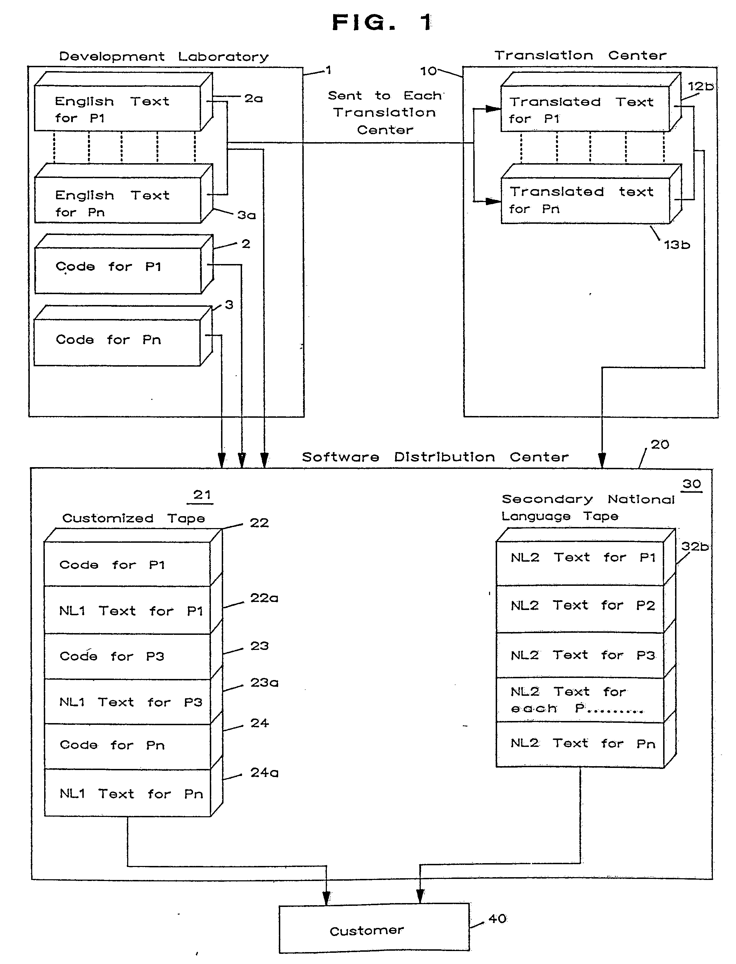

With reference to Fig. 1, the program development laboratory 1 writes the operational code for application programs characterized as P1 through Pn. The operational code is the assemblage of instructions which, when loaded into a data processing system and run, causes the system to be directed to the solution of a particular application such as word processing, accounts receivable, etc. In the environment of this invention, the operational code does not include actual text material. That is, even though the application program causes text material to be sent to the display screen for guidance of the user, the operational code does not contain the text material per se. Instead, the operational code identifies the text material with a multi-character identification which is unrelated to the storage address at which the text material is to be stored.

This is not to say that the writing of the application program is done without reference to a language. Most commonly, at the time the operational code is written, the text materials will be written in English and stored in a separate library. The text material is tied to the operational code by the multi-character identification. That is, when the operational code requires the display of a text message for the user on the system display screen it will send a request for the particular message identified by the multi-character identification. The system will search the text library tape, locate the multi-character identification and display it to the operator.

As shown in block 1, the programming development laboratory which writes the application program will create the operational code 2 for application program 1, shown as P1 in the drawing, and, at the same time, create the English text 2a for the application program 1.

The programming development laboratory will usually be involved in the simultaneous development of a number of application programs, shown as P1 through Pn in the drawing. Each application program has an operational code portion such as 2 and 3, and a text portion shown as 2a and 3a.

When the writing and testing of the application program in English has been completed, the text material is sent to the translation center 10 for conversion into other national languages such as German, French, or Italian. The text material for programs P1 through Pn is translated into all the national languages to provide text tape portions 12a through 13a of the application program. It will be appreciated that the operational code does not have to be retested with the individual translated national languages because the translation process does not change anything in the operational code portion.

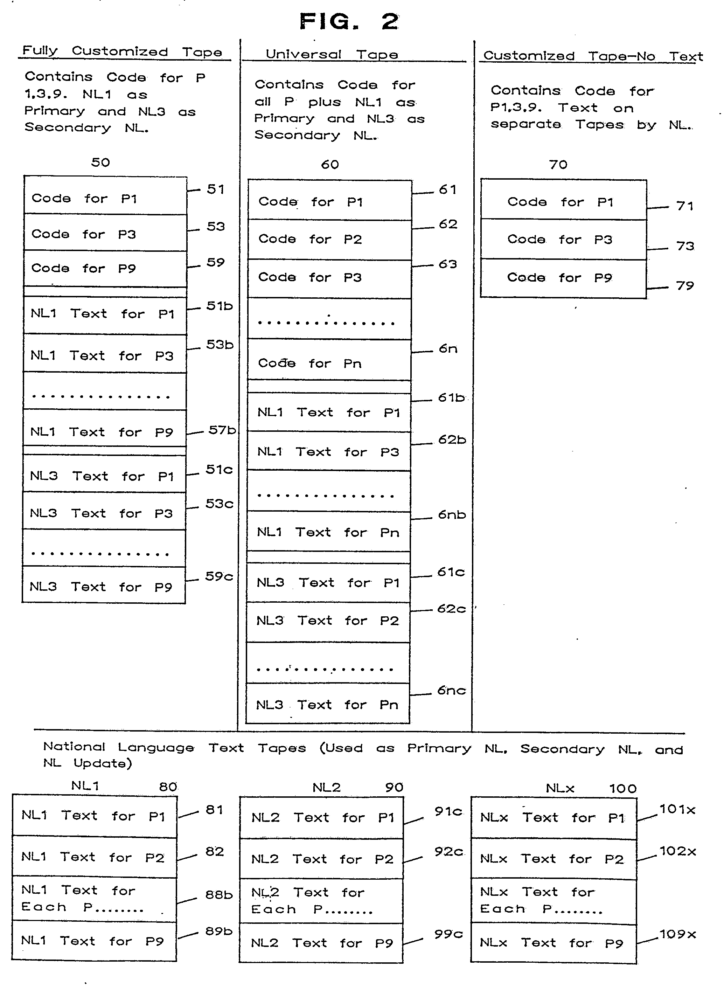

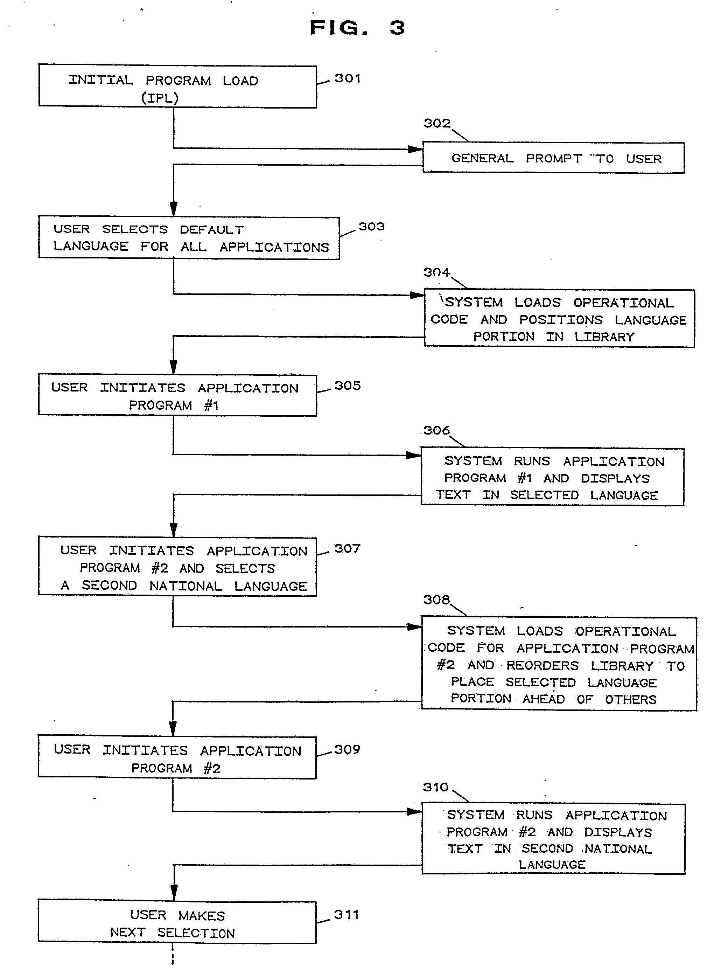

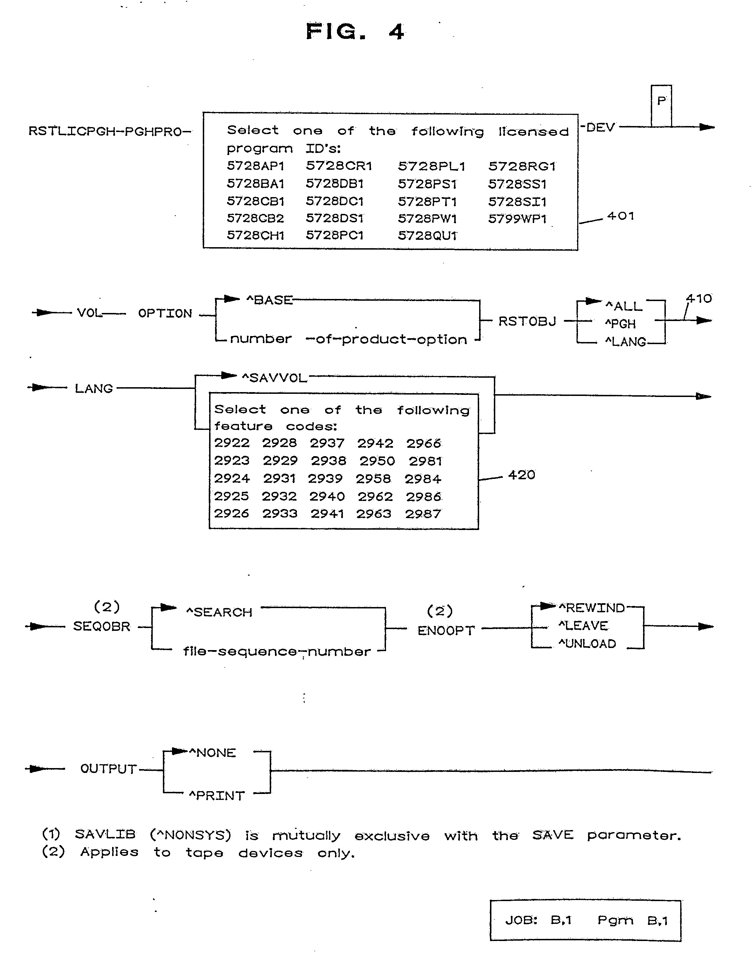

At this point, the operational code tape 2 and the English language text tape 3 are sent from the development laboratory 1 to the software distribution center 20. The translation center 10 sends the national language tapes 12a through 13a to the distribution center 20. The distribution center prepares the tapes which are sent directly to the customer. Depending on the customer's needs, the distribution tapes can take a variety of forms. The most common form will be customized tape 21 which contains a copy of the operational code 22, 23 through 24 for application programs P1, P2 through Pn and a corresponding English text portion 22a, 23a through 24a for application programs P1, P2 through Pn. Quite commonly, the customer will also order a secondary national language text for these programs. A tape, or tapes, containing the text for application programs P1 through Pn will be prepared at the distribution center from the translated text received from the translation center. As shown in the drawing, the secondary national language tape 32b can include the secondary national language text for a number of application programs P1, P2, P3, through Pn. These tapes are then sent from the distribution center to the customer 40, where they are installed and run on the data processing system. It will also be appreciated that the format of the tape sent from the distribution center to the customer may be varied according to the customer requirements. Some of the format options are shown in Fig. 2. In the event the customer orders application programs P1, P3 and P9, the operational code portions 51, 53 and 59, respectively, would be recorded on the tape to be sent to the customer. The tape would also include the primary national language text portions 51b, 53b and 59b corresponding to the operational code. A fully customized tape 50 could also contain text 51c, 53c and 59c representing an additional national language, for example NL3, corresponding to the application programs P1, P3 and P9. The universal tape 60, shown in FIG. 2, would contain the operational code portions 61, 62, 63 through 6n for all application programs P1 through Pn. Tape 60 would also contain the national language text portions 61b, 62b through 6nb, representing the national language text portion for the primary language NL1 used by all application programs P1 through Pn. Since language NL3 is selected as the secondary national language, the tape would also include national language text portions 61c, 62c through 6nc, representing the national text portion of the secondary national language NL3. It would also be possible to supply the operational code for application programs on a customized tape which is separate from the tape containing the language portion. This is shown in tape 70, which contains only the operational code portion 71, 73 and 79 for the application programs P1, P3 and P9. If a customized tape is used, the language portion must be supplied on a second tape. If this is done, the preferred form is to supply tapes such as 80, 90 and 100. Language portion tape 80 would contain text portion 81b, representing national language text for application program P1, text portion 82b, representing national language text for application program P2, and text portion 89b, representing national language text for application program P9. It would also be possible to supply the text for other application programs by including the text portion for these programs in 88b. This might be done to accommodate the future use of the language portion in the event that the application program operational code is later ordered by the customer. National language tape 90 follows the format of the national language tape 80 and includes the secondary national language text for the application programs. Tape 100 is an update tape. Since it is inevitable that additional or other modifications will become necessary, some format must be available for this purpose. As shown in tape 100, there are revision portions 101x, 102x and 109x, representing the modifications to the preexisting tapes. As in the case with tapes 80 and 90, modifications for all programs may be included on the tape so that no customization is necessary when distributing the tapes to customers. Fig. 3 is a flow chart showing the interaction between the user, the data processing system and the application program. When the data processing system is initially powered up, the initial program load (IPL) procedure requires an election of the desired language for the display of data. This election becomes the default selection, and prevails unless a specific selection of another language is made for a particular application program. At IPL time, depicted by block 301, the user is presented a generic prompt 302 on the display screen, which requires him to select a national language for the presentation of text as shown in block 303. In response to this selection, shown in block 304, the system IPL procedure locates the selected language portion containing the desired national language and places it in the system library list at a point near the beginning of the list and before any other language li brary. In addition, as shown in block 305, the system transfers control to the operator for the selection of a desired application program, designated as application program #1, for execution. The system then runs the application program #1, shown in block 306, utilizing the multiple character text identification of the operational code to seek out the text material from the first national language portion located in the system library. When the execution of application program #1 has been completed, the system returns control to the user for action. It will be appreciated that the execution of application program #1 may return control of the system to the user for purposes related to the application program. In block 307, after control of the data processing system has been surrendered by application program #1, the user may select a second application program for execution. At this time the display of Fig. 4 is presented to the user for selection of the application program and also an option to select a new national language. In response to this selection, in block 308, the system loads the operational code for the application program #2 and reorders the library sequence to place the language portion containing the desired national language near the beginning of the library, ahead of all other language portions. When this has been completed, as shown in block 309, the user initiates operation of the system to execute the application program #2. As shown in block 310, the data processing system then runs the application program #2 and displays the text material relating to this application program in the second national language. Upon completion of the application program #2, the data processing again returns control of the system to the user, as shown in block 311. Fig. 4 is representative of a display screen presented to the user at the time an application program is loaded into the data processing system preparatory to running the application. The first step for the operator is to make the selection of the desired application program from the list 401 representing all the application programs which are available to the system. The selection is accomplished by entering the program ID corresponding to the desired application program. The user elects to specify that a national language selection is to be made. This is done in line 410 of the display screen. The next step is the entry of the particular feature code corresponding to the national language which is desired to be selected. This is done by selecting the feature code from block 420 which represents the desired national language. The entry of this information selects the appropriate national language tape and places it in the system library in a position before all other language libraries, thereby ensuring that the system will encounter a match for the message identification with the desired national language portion before it reaches a match with any of the other language portions which may be on the system. The system uses libraries advantageously in performing the invention. The operating code for the application program will contain a multi-position identification number, for example, seven characters, for each text message. The text messages for each language are located in separate message files. That is, there is a separate message file for each language, and each message file contains all the text used by all the application programs which can be run on the system. If only one language is to be used on the system, only the message file corresponding to that language need be in the library. If more than one language is to be used, then the message file for each language must be in the library. Only one message file, and therefore, also only one language, may be used with one application program at a time. It is a characteristic of data processing systems, such as the IBM System 38 Data Processing System, that commands which specify a qualified object name will simply search the ordered list of libraries until a match is found. Thus, a display text command in the application program will specify an object with a seven character identification which causes the library to be sequentially searched until a match is found. Although each message file will contain a match, the system will display only the first match found. It is a simple matter to place the message file containing the desired language before all the other message files to ensure that the correct language is selected. Location of the appropriate message file ahead of all the others is accomplished in response to an operator generated signal at the time of initial program load or the beginning of execution of the application program. It will be appreciated that the language selected may be different for different application programs and may even be different for sequential runs of the same application program. As an example, an operator familiar with English might elect to run a data entry application program in English. Another operator on the same system at a later point in time might prefer to run the program in Spanish. This invention accommodates such action since the application program operation code and the text are never combined. If it were necessary to integrate the operational code and the text prior to running the program in a new language, the switch between languages becomes impractical.

**Claims**

1. A method for supplying application programs with text material in a language of choice, comprising the steps of:

a. preparing an operational code portion of the application program;

b. preparing a text portion of said application program in a selected language by copying said text portion from a source containing the text for all languages available for selection; and,

c. writing said operational code and said text portion to appropriate system libraries at installation on the using system.

2. A multi-language system for application programs, comprising:

a. an operational code portion of said program capable of being separately stored and identified;

b. a text portion of said program, in a first national language selected from a plurality of text portions each in a different national language, separately stored from said operational code portion without storage address constraint; and,

c. means responsive to said operational code portion for identifying and displaying data from said text portion.

3. A system according to claim 2 wherein said means for identifying and displaying comprises library search means.

4. A system according to claim 3 wherein said library search means sequentially searches system libraries for a match with an object specified for display by said operational code.

5. A system according to claim 4 wherein said means for identifying and displaying operates to display the first object which matches the description supplied by the operational code.

6. A system according to claim 5 wherein said description includes a multi-character identification number.

7. A system according to claim 6 wherein said description further includes a message file name.

8. In a data processing system having a plurality of application programs and a system library, means for displaying the text material for said application programs in a selected language, comprising:

a. operational code portions for each of said application programs;

b. each of said operational code portions including multi-character text identification data identifying all text material to be displayed;

c. a first text portion including text material in a first selected language identified according to said multi-character text identification data;

d. a second text portion including text material in a second selected language identified according to said multi-character text identification data; and,

e. means for selecting said first or second text portions for display of all text material.

9. A system according to claim 8 wherein said means for selecting text material from said first or second text portions is dependent on the relative positions of said first and second text portions in said system library.

10. A system according to claim 9 wherein said means for said first or second text portions is responsive to an operator entered signal.

# FIG. 1

EP 0 333 612 A2

# FIG. 2

**Fully Customized Tape**

Contains Code for P 1,3,9. NL1 as Primary and NL3 as Secondary NL.

50

| | |
|---|---|
| Code for P1 | 51 |
| Code for P3 | 53 |
| Code for P9 | 59 |
| NL1 Text for P1 | 51b |
| NL1 Text for P3 | 53b |
| . . . . . . . . . . . . . . | |
| NL1 Text for P9 | 57b |
| NL3 Text for P1 | 51c |
| NL3 Text for P3 | 53c |
| . . . . . . . . . . . . . . | |
| NL3 Text for P9 | 59c |

**Universal Tape**

Contains Code for all P plus NL1 as Primary and NL3 as Secondary NL.

60

| | |
|---|---|
| Code for P1 | 61 |
| Code for P2 | 62 |
| Code for P3 | 63 |
| . . . . . . . . . . . . . . | |
| Code for Pn | 6n |
| NL1 Text for P1 | 61b |
| NL1 Text for P3 | 62b |
| . . . . . . . . . . . . . . | |
| NL1 Text for Pn | 6nb |
| NL3 Text for P1 | 61c |
| NL3 Text for P2 | 62c |
| . . . . . . . . . . . . . . | |
| NL3 Text for Pn | 6nc |

**Customized Tape-No Text**

Contains Code for P1,3,9. Text on separate Tapes by NL.

70

| | |
|---|---|
| Code for P1 | 71 |
| Code for P3 | 73 |
| Code for P9 | 79 |

National Language Text Tapes (Used as Primary NL, Secondary NL, and NL Update)

NL1   80

| | |
|---|---|
| NL1 Text for P1 | 81 |
| NL1 Text for P2 | 82 |
| NL1 Text for Each P........ | 88b |
| NL1 Text for P9 | 89b |

NL2   90

| | |
|---|---|
| NL2 Text for P1 | 91c |
| NL2 Text for P2 | 92c |
| NL2 Text for Each P........ | |
| NL2 Text for P9 | 99c |

NLx   100

| | |
|---|---|
| NLx Text for P1 | 101x |
| NLx Text for P2 | 102x |
| NLx Text for Each P........ | |
| NLx Text for P9 | 109x |

# FIG. 3

INITIAL PROGRAM LOAD (IPL) — 301

GENERAL PROMPT TO USER — 302

USER SELECTS DEFAULT LANGUAGE FOR ALL APPLICATIONS — 303

SYSTEM LOADS OPERATIONAL CODE AND POSITIONS LANGUAGE PORTION IN LIBRARY — 304

USER INITIATES APPLICATION PROGRAM #1 — 305

SYSTEM RUNS APPLICATION PROGRAM #1 AND DISPLAYS TEXT IN SELECTED LANGUAGE — 306

USER INITIATES APPLICATION PROGRAM #2 AND SELECTS A SECOND NATIONAL LANGUAGE — 307

SYSTEM LOADS OPERATIONAL CODE FOR APPLICATION PROGRAM #2 AND REORDERS LIBRARY TO PLACE SELECTED LANGUAGE PORTION AHEAD OF OTHERS — 308

USER INITIATES APPLICATION PROGRAM #2 — 309

SYSTEM RUNS APPLICATION PROGRAM #2 AND DISPLAYS TEXT IN SECOND NATIONAL LANGUAGE — 310

USER MAKES NEXT SELECTION — 311

# FIG. 4

RSTLICPGH—PGHPRO—

Select one of the following licensed
program ID's:
| | | | |
|---|---|---|---|
| 5728AP1 | 5728CR1 | 5728PL1 | 5728RG1 |
| 5728BA1 | 5728DB1 | 5728PS1 | 5728SS1 |
| 5728CB1 | 5728DC1 | 5728PT1 | 5728SI1 |
| 5728CB2 | 5728DS1 | 5728PW1 | 5799WP1 |
| 5728CH1 | 5728PC1 | 5728QU1 | |

—DEV———  P  ———►

—401

— VOL— OPTION — ^BASE / number -of-product-option — RSTOBJ — ^ALL / ^PGH / ^LANG —► 410

— LANG — ^SAVVOL

Select one of the following
feature codes:
| | | | | |
|---|---|---|---|---|
| 2922 | 2928 | 2937 | 2942 | 2966 |
| 2923 | 2929 | 2938 | 2950 | 2981 |
| 2924 | 2931 | 2939 | 2958 | 2984 |
| 2925 | 2932 | 2940 | 2962 | 2986 |
| 2926 | 2933 | 2941 | 2963 | 2987 |

— 420

(2)
— SEQOBR — ^SEARCH / file-sequence-number — ENOOPT (2) — ^REWIND / ^LEAVE / ^UNLOAD —►

— OUTPUT — ^NONE / ^PRINT —

(1) SAVLIB (^NONSYS) is mutually exclusive with the SAVE parameter.
(2) Applies to tape devices only.

JOB: B,1    Pgm  B,1